(19) Europäisches Patentamt
European Patent Office
Office européen des brevets

(11) **EP 3 996 110 A1**

(12) **EUROPEAN PATENT APPLICATION**

(43) Date of publication:
**11.05.2022 Bulletin 2022/19**

(21) Application number: **21204908.4**

(22) Date of filing: **27.10.2021**

(51) International Patent Classification (IPC):
**G21F 9/02** (2006.01)       **G21C 13/02** (2006.01)

(52) Cooperative Patent Classification (CPC):
**G21F 9/02; G21C 13/022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **05.11.2020   JP 2020184811**

(71) Applicant: **HITACHI-GE NUCLEAR ENERGY, LTD.**
**Hitachi-shi**
**Ibaraki 317-0073 (JP)**

(72) Inventors:
• **FUKUI, Sohei**
 **Tokyo, 100-8280 (JP)**

• **ISHIDA, Kazushige**
 **Tokyo, 100-8280 (JP)**
• **ITO, Tsuyoshi**
 **Tokyo, 100-8280 (JP)**
• **TOMINAGA, Kazuo**
 **Ibaraki, 317-0073 (JP)**
• **TANAKA, Motoi**
 **Ibaraki, 317-0073 (JP)**
• **TANAKA, Masaaki**
 **Ibaraki, 317-0073 (JP)**

(74) Representative: **MERH-IP Matias Erny Reichl Hoffmann**
**Patentanwälte PartG mbB**
**Paul-Heyse-Strasse 29**
**80336 München (DE)**

(54) **IODINE TRAPPING APPARATUS AND NUCLEAR POWER STRUCTURE**

(57)    To provide an iodine trapping apparatus capable of trapping organic iodine in a wide temperature range with high efficiency. The iodine trapping apparatus includes a first trapping agent (2) capable of trapping organic iodine in a gas in a nuclear power structure main body (4). The first trapping agent (2) contains a generating and trapping component which generates an iodide ion I- from organic iodine RI and traps the generated iodide ion, and a generating component which is different from the generating and trapping component, generates an iodide ion from the organic iodine at least at 100°C to 130°C, and traps the generated iodide ion in the generating and trapping component.

[FIG. 1]

EP 3 996 110 A1

**Description**

Technical Field

The present invention relates to an iodine trapping apparatus and a nuclear power structure.

Background Art

An iodine trapping trap apparatus such as a filtered containment venting apparatus is installed in a nuclear power structure such as a reactor facility, in order to prevent a radioactive substance discharged from a nuclear power structure main body such as a reactor from leaking into the environment. For example, when the pressure in a containment vessel abnormally rises due to core damage caused by a reactor accident, the containment vessel will be damaged and a large-scale leak will occur, so that steam in the containment vessel is vented in advance, and overpressure damage of the containment vessel is prevented. When high-temperature and high-pressure steam is discharged from the reactor into the containment vessel, the high-temperature and high-pressure steam is passed through the iodine trapping apparatus, and major radioactive substances are trapped before the high-temperature and high-pressure steam is discharged into the atmosphere.

Examples of radioactive substances discharged when a reactor accident occurs include noble gas, aerosol, inorganic iodine, and organic iodine. The iodine trapping apparatus traps these radioactive substances excluding noble gas and prevents these radioactive substances from being discharged to the environment. Organic iodine discharged from the reactor, including methyl iodide, is hardly soluble in water (that is, hydrophobic), and is not sufficiently trapped even if introduced into pool water or scrubbing water in a pressure reduction chamber at the time of venting. In addition, the organic iodine may be newly generated by a reaction of elemental iodine in an exhaust process from the reactor. For these reasons, an iodine trapping apparatus capable of efficiently trapping the organic iodine is required.

PTL 1 describes a filtered containment venting apparatus as an example of the iodine trapping apparatus. PTL 1 describes a filtered containment venting apparatus that is connected to a venting pipe connected to a containment vessel of a reactor and configured to remove radioactive substances, and the filtered containment venting apparatus includes a filtered containment venting vessel having a filter for removing scrubbing water and radioactive substances therein, and a nonvolatile liquid disposed in the filtered containment venting apparatus and capable of trapping organic iodine, in which the nonvolatile liquid is an ionic liquid.

Citation List

Patent Literature

PTL 1: JP-A-2020-42040

Summary of Invention

Technical Problem

There are various temperatures of gases generated in the nuclear power structure main body when an accident occurs. As a result of studies by the present inventors, it is found that there is room for improvement in trapping efficiency in the technique described in PTL 1 for the organic iodine in a gas that is in a relatively low temperature range (for example, 100°C to 130°C) among the temperature ranges of the gases generated in the nuclear power structure main body.

An object of the invention is to provide an iodine trapping apparatus and a nuclear power structure capable of trapping organic iodine in a wide temperature range with high efficiency.

Solution to Problem

An iodine trapping apparatus of the invention includes a first trapping agent capable of trapping organic iodine in a gas in a nuclear power structure main body. The first trapping agent contains a generating and trapping component which generates an iodide ion from organic iodine and traps the generated iodide ion, and/or a generating component which is different from the generating and trapping component, generates an iodide ion from the organic iodine at least at 100°C to 130°C, and traps the generated iodide ion in the generating and trapping component. Other solutions will be described later in embodiments for carrying out the invention.

Advantageous Effect

According to the invention, it is possible to provide an iodine trapping apparatus and a nuclear power structure capable of trapping organic iodine in a wide temperature range with high efficiency.

Brief Description of Drawings

[FIG. 1] FIG. 1 is a diagram illustrating a filtered containment venting apparatus according to a first embodiment.
[FIG. 2] FIG. 2 is a graph showing organic iodine trapping performance with respect to a temperature.
[FIG. 3] FIG. 3 is a graph showing a permissible amount of the organic iodine with respect to a use amount of a first trapping agent.
[FIG. 4] FIG. 4 is a graph showing a change with time of the organic iodine trapping performance at 70°C.
[FIG. 5] FIG. 5 is a flowchart showing a method of manufacturing the first trapping agent.
[FIG. 6] FIG. 6 is a diagram illustrating a filtered containment venting apparatus according to a second embodiment.
[FIG. 7] FIG. 7 is a diagram illustrating a filtered containment venting apparatus according to a third embodiment.
[FIG. 8] FIG. 8 is a diagram illustrating a filtered containment venting apparatus according to a fourth embodiment.
[FIG. 9] FIG. 9 is a diagram illustrating a filtered containment venting apparatus according to a fifth embodiment.
[FIG. 10] FIG. 10 is a top view of a porous member.
[FIG. 11] FIG. 11 is a top view of a rectifying member.

Description of Embodiments

Hereinafter, embodiments of the invention will be described with reference to the drawings. However, the invention is not limited to the following embodiments, and for example, different embodiments may be combined, or the invention may be arbitrarily modified within a range in which the effects of the invention are not significantly impaired. In addition, the same members are designated by the same reference numerals, and redundant description will be omitted. Further, members having the same functions are denoted by the same names. The contents shown in the drawings are merely schematic, and may be changed from an actual configuration to the extent that the effect of the invention is not significantly impaired for convenience of illustration.

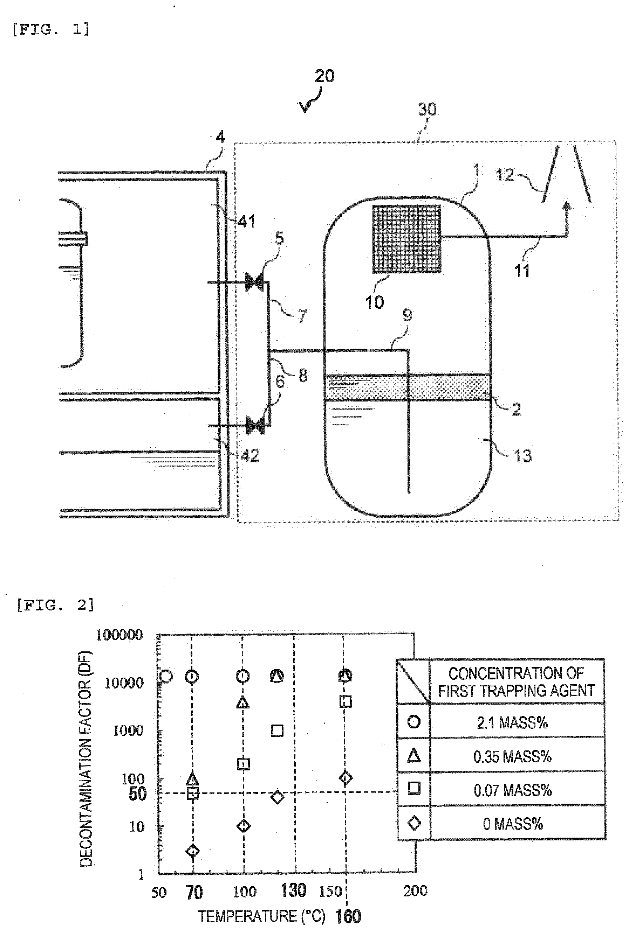

FIG. 1 is a diagram illustrating a filtered containment venting apparatus 30 according to a first embodiment. A nuclear power plant 20 includes at least a containment vessel 4 and the filtered containment venting apparatus 30. The filtered containment venting apparatus 30 removes radioactive substances in a gas as much as possible when releasing the gas in the containment vessel 4 to the atmosphere in a case where a severe accident such as breakage of the containment vessel 4 occurs. Accordingly, the pressure in the containment vessel 4 including a dry well 41 and a wet well 42 can be reduced.

Although the filtered containment venting apparatus 30 is an example of an iodine trapping apparatus, the containment vessel 4 is an example of a nuclear power structure main body, and the nuclear power plant 20 is an example of a nuclear power structure, the iodine trapping apparatus, the nuclear power structure main body, and the nuclear power structure are not limited thereto. For example, the nuclear power structure main body may be, for example, a suppression pool of a nuclear power plant, an off-gas device of a nuclear power plant, a storage vessel or transport vessel of a nuclear fuel material, or a storage vessel of an in-core structure. Therefore, these can be used as a nuclear power structure main body, and further as a nuclear power structure including the iodine trapping apparatus.

When applying the iodine trapping apparatus to a nuclear power plant, the form of the reactor is not particularly limited, and the reactor can be applied in various forms such as a boiling water reactor (BWR), an advanced boiling water reactor (ABWR), a pressurized water reactor (PWR).

For example, although situations are different depending on individual plant outputs and accident scenarios, it is evaluated that, among radioactive substances generated in an accident, about 1 kg of organic iodine and about 20 kg of inorganic iodine are generated in a severe accident accompanied by fuel breakage such as breakage of a pressure vessel (not shown) inside the containment vessel 4. Especially, it is evaluated that methyl iodide ($CH_3I$) is mainly generated as the organic iodine and iodine molecule ($I_2$) is mainly generated as the inorganic iodine. Therefore, the filtered containment venting apparatus 30 has a role of being used for trapping aerosol, inorganic iodine, and organic iodine, which are radioactive substances.

The filtered containment venting apparatus 30 includes a filtered containment venting vessel 1 (an example of a first vessel) that accommodates a first trapping agent 2 and a second trapping agent 13 (both of which will be described later), and a dry well venting pipe 7, a wet well venting pipe 8, and an inlet pipe 9 (all of which are examples of a venting pipe) that are connected to the containment vessel 4. The dry well venting pipe 7 and the wet well venting pipe 8 include isolation valves 5 and 6, respectively. One end side of the inlet pipe 9 is connected to the dry well venting pipe 7 and the wet well venting pipe 8, and the other end side of the inlet pipe 9 is open to the inside of the second trapping agent 13. Accordingly, the filtered containment venting vessel 1 communicates with the containment vessel 4 through the dry well venting pipe 7, the wet well venting pipe 8, and the inlet pipe 9.

The filtered containment venting apparatus 30 includes a fiber filter 10 (an example of a radioactive substance removal filter) that removes a radioactive substance in a gas inside the filtered containment venting vessel 1, an outlet pipe 11 connected to the fiber filter 10, and an exhaust cylinder 12. Accordingly, other radioactive substances are further removed from the gas containing organic iodine, inorganic iodine, and aerosol by the first trapping agent 2 and the second trapping agent 13, and the decontaminated gas is discharged to the outside through the exhaust cylinder 12, which will be described in detail later.

The first trapping agent 2 accommodated in the filtered containment venting vessel 1 is capable of trapping the organic iodine in the gas in the containment vessel 4 and discharged from the containment vessel 4. The first trapping agent 2 contains a generating and trapping component and a generating component. The generating and trapping component generates (that is, decomposes) iodide ions (I$^-$) from the organic iodine (RI, R is an optional organic group) and traps (for example, dissolves) the generated iodide ions. The organic iodine on which the generating and trapping component acts is, for example, organic iodine that acts at 130°C to 160°C.

The generating component is a component different from the generating and trapping component, and generates iodide ions from the organic iodine at least at 100°C to 130°C, and traps the generated iodide ions in the generating and trapping component. The organic iodine on which the generating component acts may be any organic iodine that acts at least at 100°C to 130°C, and is preferably organic iodine that acts at 70°C to 130°C.

The temperature of the gas generated inside the containment vessel 4 due to the breakage of the pressure vessel in a severe accident is, for example, about 100°C to 160°C. Therefore, the first trapping agent 2 contains the generating and trapping component and the generating component, and in particular, the organic iodine decomposing action of the generating component in a relatively low temperature range, that is, at least 100°C to 130°C is enhanced. Accordingly, the organic iodine trapping performance is exerted in a wide temperature range of, for example, about 100°C to 160°C, preferably about 70°C to 160°C.

Although the specific type of the generating and trapping component is not particularly limited, the generating and trapping component is preferably a nonvolatile liquid. The nonvolatile liquid has a function of decomposing organic iodine and dissolving iodide ions, and is preferably nonvolatile (substantially nonvolatile) at, for example, 160°C or lower, preferably 200°C or lower, and is preferably not thermally decomposed. When an accident of the containment vessel 4 occurs, it is assumed that steam is vented at about 100°C to 160°C, and therefore, if the liquid acting as a wet filter is nonvolatile, volatilization of the nonvolatile liquid can be prevented even if a high-temperature and high-pressure gas is introduced at the time of venting. The nonvolatile liquid may be a liquid at an operating temperature (for example, 100°C to 160°C) and may be a solid at room temperature (for example, 25°C), but is preferably a liquid also at room temperature.

The nonvolatile liquid is hydrophobic in the illustrated example. By using the hydrophobic nonvolatile liquid, the first trapping agent 2 can be made hydrophobic, the first trapping agent 2 can easily act on the organic iodine, which is also hydrophobic, and the trapping efficiency can be improved.

Specific examples of the nonvolatile liquid include at least one of an ambient temperature molten salt, an ionic liquid, a quaternary salt, a surfactant, a phase transfer catalyst, and a mixture thereof. These nonvolatile liquids have sufficient heat resistance even under the condition of about 200°C, which is a temperature of gas to flow into the filtered containment venting apparatus 30 in an accident. Therefore, by using the nonvolatile liquid which is in a liquid phase even at 200°C or higher, the nonvolatile liquid can be stably present in a liquid phase even in an accident, and the organic iodine can be sufficiently trapped.

An ionic liquid composed of only a combination of a cation (X$^+$) and an anion (Y-) is preferable. The ionic liquid is also excellent in radiation resistance, and has a property of trapping a substrate such as a radioactive substance at a high concentration in the ionic liquid. In particular, since the organic iodine is a substance that is poorly soluble in water and highly volatile, the trapping efficiency for the organic iodine can be increased by using the ionic liquid.

Examples of the cation constituting the ionic liquid include organic cations containing at least one functional group such as phosphonium, sulfonium, ammonium, pyrrolidinium, piperidinium, and morpholinium. Specific examples thereof include a quaternary ammonium salt, a quaternary phosphonium salt, a tertiary sulfonium salt, a pyrrolidinium salt, a piperidinium salt or a morpholinium salt. Among these, a cation mainly composed of a phosphorus element, a sulfur element or a nitrogen element and mainly bonded to a substituent such as carbon, is preferable. In addition, the cation is preferably composed mainly of a single bond carbon chain in order to maintain high solubility of the iodide ion, but a part of the cation may be crosslinked with a double bond, a triple bond, or an oxygen element.

For example, methyl iodide, which is an example of the organic iodine, is separated without being dissolved in hydrophobic 1-butyl-3-methylimidazolium bis(trifluoromethylsulfonyl)amide, but is dissolved in and uniformly mixed with hydrophobic trihexyl(tetradecyl)phosphonium bis(trifluoromethylsulfonyl)amide having the same anion structure but different cation structures. Therefore, it is preferable to select and use a hydrophobic nonvolatile liquid capable of dissolving the organic iodine from the viewpoint of promoting decomposition.

Since a methyl group or the like, which is a substance having a carbon chain number of 1, is easily decomposed and volatilized at a high temperature of 160°C, the carbon chain number is preferably 2 or more. For example, in 1-butyl-3-methylimidazolium iodide, a methyl group of a cation is eliminated at 160°C, and self-decomposition is likely to occur. From such a viewpoint, when the organic cation is a bulky organic cation having a long carbon chain number, the solubility and heat resistance of the organic iodine are increased, and thus the organic iodine can be trapped with high trapping efficiency.

Examples of the anion include an organic anion containing at least one functional group of

a functional group such as $H_3C^-$, $H_2RC^-$, $HR_2C^-$, $R_3C^-$, $NC^-$, or $RCC^-$, which is an anion-charged carbon element,
a functional group such as $RS^-$ which is an anion-charged sulfur element,
a functional group such as $N_3^-$, $H_2N^-$, $HRN-$, or $R_2N^-$, which is an anion-charged nitrogen element, and
a functional group such as $RO^-$, $RCO_2^-$, $RPO_3^-$, $RSO_3^-$, $RPO_4^-$, $R_2PO_2^-$, and $R_3CO^-$, which is an anion-charged oxygen element.

In addition, examples of the anion include an inorganic anion containing at least a functional group of

a functional group such as $HO^-$, $NO_2^-$, $FO_3^-$, $ClO_3^-$, $BrO_3^-$, $IO_3^-$, $FO_4^-$, $ClO_4^-$, $BrO_4^-$, or $IO_4^-$, and
a functional group such as $F^-$, $Cl^-$, $Br^-$, $I^-$, $F_3^-$, $Cl_3^-$, $Br_3^-$, or $I_3^-$, which is an anion-charged halogen element.

Among these, since the anion has a strong action of decomposing the organic iodine, an ion having a high nucleophilic property is preferable, and an anion in which a charged element excluding a hydrogen element is present at an end is particularly preferable.

For example, as compared with $H_2N^-$, an anion molecule composed mainly of a charged nitrogen element such as $R_2N^-$ ($R-N^--R$) and an element other than a hydrogen element has a lower nucleophilic property and lower decomposition performance for methyl iodide. Since the anion has a high nucleophilic property and hardly causes hydrolysis, and it is difficult to change the pH of scrubbing water when the anion is injected into the filtered containment venting vessel 1, an anion containing at least one functional group selected from $H_3C^-$, $H_2RC^-$, $HR_2C^-$, $R_3C^-$, $NC^-$, $RCC^-$, $RS^-$, $N_3^-$, $H_2N^-$, $HRN-$, $R_2N^-$, $RO^-$, $RCO_2^-$, $RPO_3^-$, $RSO_3^-$, $RPO_4^-$, $R_2PO_2^-$, $R_3CO^-$, $HO^-$, $NO_2^-$, $FO_3^-$, $ClO_3^-$, $BrO_3^-$, $IO_3^-$, $FO_4^-$, $ClO_4^-$, $BrO_4^-$, $IO_4^-$, $F^-$, $Cl^-$, $Br^-$, $I^-$, $F_3^-$, $Cl_3^-$, $Br_3^-$, and $I_3^-$ is preferable.

In order to achieve high trapping performance for the organic iodine, it is preferable that both dissolution of the organic iodine by cations in an ionic liquid suitable as a nonvolatile liquid and decomposition of the organic iodine caused by a nucleophilic attack of an anion on the organic iodine occur. Examples of the nonvolatile liquid that causes such a phenomenon include hydrophobic trihexyl(tetradecyl)phosphonium chloride.

When an ionic liquid is used as the nonvolatile liquid, it is considered that the ionic liquid ($X^+$-$Y^-$) and the organic iodine (RI, R is an optional organic group) have an action represented by the following Formula (1).

$$X^+\text{-}Y^- + RI \rightarrow X^+\text{-}Y^- + I^- + R^+ \qquad \text{Formula (1)}$$

In the organic iodine (RI), the organic group (R) is positively charged and iodine (I) is negatively charged. Therefore, the ionic liquid can decompose the organic iodine by attacking the organic group in a high temperature range of, for example, 130°C to 160°C to generate iodide ions. The iodide ion is more stable in a liquid phase than the organic iodine, and can stably retain the iodide ions by interacting with the cation constituting the nonvolatile liquid. As a result, the organic iodine can be retained in the liquid phase, and leakage to the environment can be prevented.

Even in the case of a nonvolatile liquid other than the ionic liquid, the organic iodine is attacked in the nonvolatile liquid as in the case of the ionic liquid, and iodide ions are generated. Accordingly, the organic iodine can be retained in the nonvolatile liquid.

The specific type of the generating component contained in the first trapping agent 2 is not particularly limited, but the generating component is preferably a first reducing agent. The "first reducing agent" is a name given to be distinguished from a "second reducing agent" described later, and is synonymous with a simple "reducing agent" from the viewpoint of chemical properties. Hereinafter, the invention will be described by exemplifying the nonvolatile liquid as the generating and trapping component and exemplifying the first reducing agent as the generating component. However, the generating and trapping component and the generating component are not limited to the nonvolatile liquid and the first reducing agent, respectively, and the following description is similarly applied to materials other than the nonvolatile liquid and the first reducing agent.

The first reducing agent decomposes the organic iodine in the nonvolatile liquid by the same action as the action represented by the above Formula (1). However, the decomposition of the organic iodine by the first reducing agent proceeds in a low temperature range of 100°C to 130°C, preferably 70°C to 130°C, which is lower than the temperature (for example, 130°C to 160°C) at the time of decomposition by the nonvolatile liquid. The first reducing agent may be dissolved or dispersed, but is preferably dissolved in the nonvolatile liquid from the viewpoint of improving the trapping efficiency. The iodide ions generated by the decomposition are trapped in the nonvolatile liquid.

The first reducing agent (an example of the generating component) is preferably a first reducing agent having an oxidation-reduction potential of lower than 0.54 V, which is a standard electrode potential at which iodine is reduced. By using such a first reducing agent, iodide ions can be liberated by reduction of iodine contained in the organic iodine, and the iodide ions stable in the liquid phase can be easily retained in the first trapping agent 2 in a liquid state.

The content of the first reducing agent in the first trapping agent 2 is preferably 0.07 mass% (700 ppm) or more with respect to the nonvolatile liquid. Accordingly, organic iodine trapping can be promoted even at a low temperature of about 70°C, and a decontamination factor (DF, the vertical axis of a graph shown in FIG. 2) obtained by dividing a radioactive concentration before decontamination by a radioactive concentration after decontamination can be set to 50 or more.

Examples of the first reducing agent include at least one of $H_2O_2$, $(COOH)_2$, $NH_2OH$, $BH_4Na$, $N_2H_5OH$, $C_6H_8O_6$ (ascorbic acid), $(NH_4)_2S$, and $H_2NC_2H_4SH$. Among these, it is desirable that the first reducing agent is determined according to stability even at a high temperature, ease of handling, availability, or the like.

FIG. 2 is a graph showing organic iodine trapping performance with respect to a temperature. The horizontal axis represents the temperature of the gas containing organic iodine, and the vertical axis represents the decontamination factor (DF) obtained by dividing the radioactive concentration before decontamination (before circulation) by the radioactive concentration after decontamination (after circulation). The graph in FIG. 2 is obtained by a test in which a gas containing methyl iodide at a concentration of 0.005 mass% (50 ppm) is used as the organic iodine, trihexyl(tetradecyl)phosphonium chloride is used as the nonvolatile liquid, and ascorbic acid is used as the first reducing agent. The test has been carried out by flowing the above gas containing organic iodine through a cylindrical column containing the first trapping agent 2 containing the nonvolatile liquid and the first reducing agent. The gas flow time (residence time) in the column and calculated based on the inner diameter and the length of the column in the flow direction is 0.25 seconds.

In FIG. 2, circles represent a plot in which the concentration of the first reducing agent with respect to the nonvolatile liquid is 2.1 mass% (21,000 ppm), triangles represent a plot in which the concentration of the first reducing agent with respect to the nonvolatile liquid is 0.35 mass% (3,500 ppm), squares represent a plot in which the concentration of the first reducing agent with respect to the nonvolatile liquid is 0.07 mass% (700 ppm), and diamonds represent a plot in which the concentration of the first reducing agent with respect to the nonvolatile liquid is 0 mass% (0 ppm, that is, the first reducing agent is not used). As shown by the plots of circles, triangles, and squares in FIG. 2, by setting the concentration of the first reducing agent to 0.07 mass% (700 ppm) or more, the decontamination factor can be set to 50 or more in a low temperature range of 70°C to 130°C in addition to a high temperature range of 130°C to 160°C, for example.

Meanwhile, as shown by the plot of diamonds, if the first reducing agent is not contained, the decontamination factor is 50 or less and the organic iodine trapping is insufficient in the low temperature range of 70°C to 130°C. This result is considered to be caused by the non-use of the first reducing agent that decomposes the organic iodine and retains the organic iodine in the nonvolatile liquid in a low temperature range of, for example, 70°C to 130°C, as described above with reference to FIG. 1.

In addition, although not illustrated, it is also found from a separate experiment that the organic iodine is hardly trapped in an aqueous solution containing the first reducing agent (corresponding to the second trapping agent 13 described later). It is considered that this is because the first reducing agent in water does not sufficiently act on the hydrophobic organic iodine since the organic iodine is hydrophobic but the aqueous solution is hydrophilic. Therefore, it is clarified by the experiment that the organic iodine trapping performance can be improved by coexisting the nonvolatile liquid and the first reducing agent.

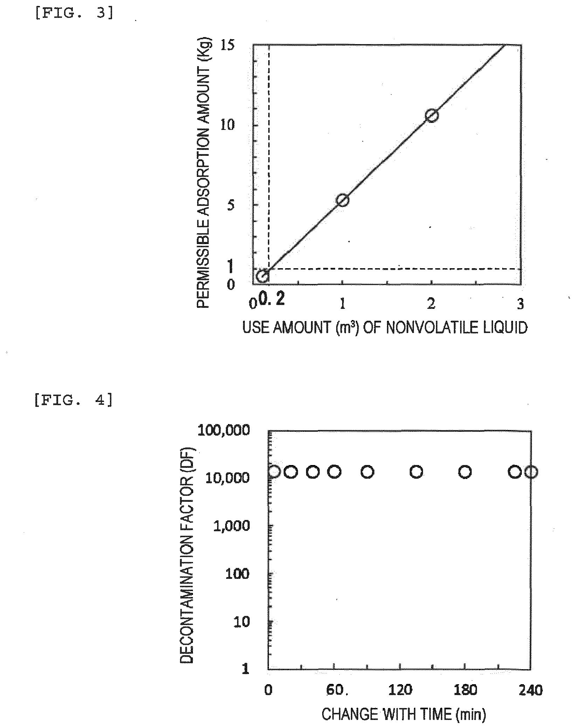

FIG. 3 is a graph showing a permissible amount of organic iodine with respect to a use amount of the nonvolatile liquid. The graph in FIG. 3 shows the use amount of the nonvolatile liquid necessary for trapping about 1 kg of organic iodine generated until the decontamination factor is 50 or less in an accident, and is obtained under the same conditions as in FIG. 2. From the graph in FIG. 3, it can be seen that it is preferable to use the nonvolatile liquid in a volume of 0.2 $m^3$ or more in order to trap about 1 kg of organic iodine.

Therefore, since the nonvolatile liquid having a relatively small volume of, for example, 0.2 $m^3$ is sufficient, it is possible to efficiently trap the organic iodine in a wide temperature range without significantly changing the design described in the above PTL 1. Accordingly, the treatment cost can be reduced. In addition, since it is not necessary to introduce a large-scale apparatus, a static system of the filtered containment venting apparatus 30 can be maintained even when the nonvolatile liquid is applied to the existing filtered containment venting apparatus 30.

In addition, since the hydrophobic nonvolatile liquid and the first reducing agent are made coexist and the nonvolatile liquid and the first reducing agent are present in the same form in the first trapping agent 2, the first reducing agent can promote the organic iodine trapping of the nonvolatile liquid, and the trapping performance can be efficiently improved. In addition, since the first reducing agent is contained in the hydrophobic nonvolatile liquid, the first reducing agent of the first trapping agent 2 and the second trapping agent 13 can be brought into contact with each other only at a liquid-liquid interface in a static state in which no accident occurs, and the contact area can be reduced. Accordingly, it is possible to prevent hydrolysis of the first reducing agent of the first trapping agent 2 and deterioration of the first reducing agent due to a pH variation of the second trapping agent 13, and to stably retain the first reducing agent in the first trapping agent 2.

FIG. 4 is a graph showing a change with time of the organic iodine trapping performance at 70°C. The graph in FIG. 4 shows a test performed under the same conditions as those of the graph in FIG. 2 except that a gas at 70°C containing methyl iodide at a concentration of 0.005 mass% (50 ppm) is continuously flowed through the column and the concentration of the first reducing agent is set to about 2.1 mass% (21,000 ppm). As a result, even after 240 minutes, the decontamination factor is 10, 000 or more, which indicates extremely high decontamination performance. Therefore, by using the first trapping agent 2 containing the nonvolatile liquid and the first reducing agent, it is possible to maintain the trapping performance over a long period of time even at a low temperature of 70°C.

Returning to FIG. 1, the organic iodine is usually in a gaseous state since a gas having a relatively high temperature flows into the filtered containment venting vessel 1 in an accident. Therefore, in the first trapping agent 2 in a liquid state, the organic iodine is present as bubbles. The organic iodine is trapped by bringing the first trapping agent 2 in a liquid state into contact with the bubbles to cause diffusion electrophoresis, thermophoresis, brown diffusion, convection, and the like. Therefore, in order to secure the contact time, it is preferable to lengthen the residence time. Specifically, it is preferable to increase the liquid amount of the first trapping agent 2 in consideration of the installation cost.

The filtered containment venting apparatus 30 includes the second trapping agent 13, which is an aqueous solution containing the second reducing agent, inside the filtered containment venting vessel 1. The second trapping agent 13 is capable of trapping at least one component of the inorganic iodine and aerosol discharged from the containment vessel 4 and further contained in the gas in the containment vessel 4. In the illustrated example, the second trapping agent 13 is scrubber water for cleaning the gas. The above first trapping agent 2 can trap the organic iodine, and the second trapping agent 13 can trap at least one component of the aerosol and the inorganic iodine by, for example, dissolution. In the illustrated example, both the first trapping agent 2 and the second trapping agent 13 are liquids, and the first trapping agent 2 is disposed on an upper layer of the second trapping agent 13. The second reducing agent may be the same type as or different from the first reducing agent.

The pH of a liquid phase containing the second trapping agent 13 is preferably alkaline. The pH of the liquid phase containing the second trapping agent 13 referred to here is the pH of the second trapping agent 13 when the nonvolatile liquid is hydrophobic and the hydrophobic nonvolatile liquid and the second trapping agent 13 which is an aqueous solution are separated into two phases as described above. Since the pH of the liquid phase containing the second trapping agent 13 is alkaline, the re-volatilization of the inorganic iodine can be particularly prevented. Specifically, the pH is, for example, 10 or more and 14 or less.

In addition, as described above, by opening the other end of the inlet pipe 9 to the inside of the second trapping agent 13, at least one component of the aerosol and the inorganic iodine in the gas supplied to the second trapping agent 13 can be trapped by the second trapping agent 13 through the inlet pipe 9. On the other hand, after the component is trapped, the gas becomes bubbles, rises inside the second trapping agent 13, and reaches the first trapping agent 2 in the upper layer. Accordingly, the organic iodine in the bubbles can be trapped by the first trapping agent 2.

The operating principle of the filtered containment venting apparatus 30 will be described with reference to FIG. 1. The radioactive substance discharged to the containment vessel 4 in an accident flows into the dry well venting pipe 7 or the wet well venting pipe 8 connected to the containment vessel 4 when the isolation valve 5 or the isolation valve 6 is open. Thereafter, the gas containing the radioactive substance flows into the second trapping agent 13 in the filtered containment venting vessel 1 via the inlet pipe 9, and the aerosol and the inorganic iodine are trapped by the second trapping agent 13. The organic iodine which is not trapped flows into the hydrophobic first trapping agent 2, and is decomposed into iodide ions and trapped. The gas after the organic iodine is trapped passes through the outlet pipe 11 and is discharged to the outside by the exhaust cylinder 12 in a state where the radioactive substance is sufficiently removed.

The first trapping agent 2 or the like (to be described later) contaminated with the radioactive substance can be extracted through, for example, a sampling port (not shown) provided in the filtered containment venting vessel 1, and can be treated and reproduced by, for example, the method described in JP-T-2003-507185.

According to the above filtered containment venting apparatus 30, in a gas having a wide temperature range generated when an accident occurs, for example, the organic iodine can be trapped with high efficiency (for example, 98% or more) in a relatively low temperature range, that is, in a wide temperature range of, for example, 100°C to 160°C, and preferably 70°C to 160°C.

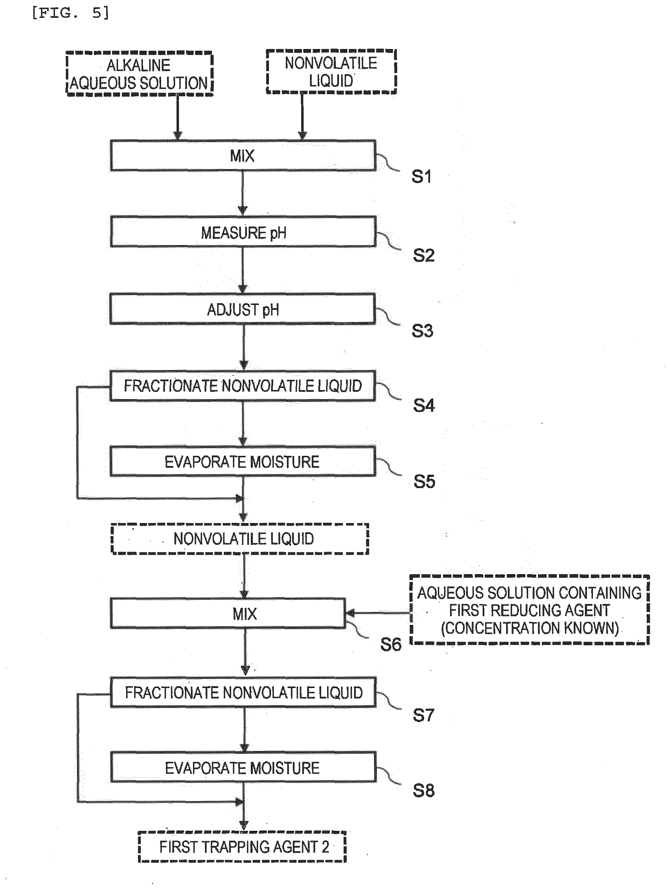

FIG. 5 is a flowchart showing a method of manufacturing the first trapping agent 2. The first trapping agent 2 sufficiently contains the nonvolatile liquid and the first reducing agent, and the method of manufacturing the first trapping agent 2 is optional, but the first trapping agent 2 can be manufactured, for example, according to the flowchart shown in FIG. 5.

First, an alkaline aqueous solution and a nonvolatile liquid are mixed (step S1), and the pH of the mixed liquid is measured (step S2). The pH is adjusted using an acid or alkali aqueous solution such that the pH is, for example, 6 or more, and preferably 10 or more (step S3). Then, the nonvolatile liquid is fractionated (step S4), water is evaporated from the fractioned nonvolatile liquid by, for example, heating (step S5) to obtain a nonvolatile liquid whose pH has been adjusted. Next, the nonvolatile liquid whose pH has been adjusted and the aqueous solution containing the first reducing agent (the concentration of the first reducing agent is known) are mixed (step S6), the nonvolatile liquid is fractionated (step S7), and the moisture is evaporated (step S8) in the same manner as in steps S4 and S5, to obtain the first trapping agent 2.

As the concentration of the first reducing agent in the first trapping agent 2, if possible, the concentration of the first reducing agent in the first trapping agent 2 may be directly measured, but when the concentration of the first reducing agent (the concentration is known) in the aqueous solution used in step S6 is compared with the amount of the first reducing agent remaining in step S8, the reduced amount can be set as the concentration of the first reducing agent in the nonvolatile liquid.

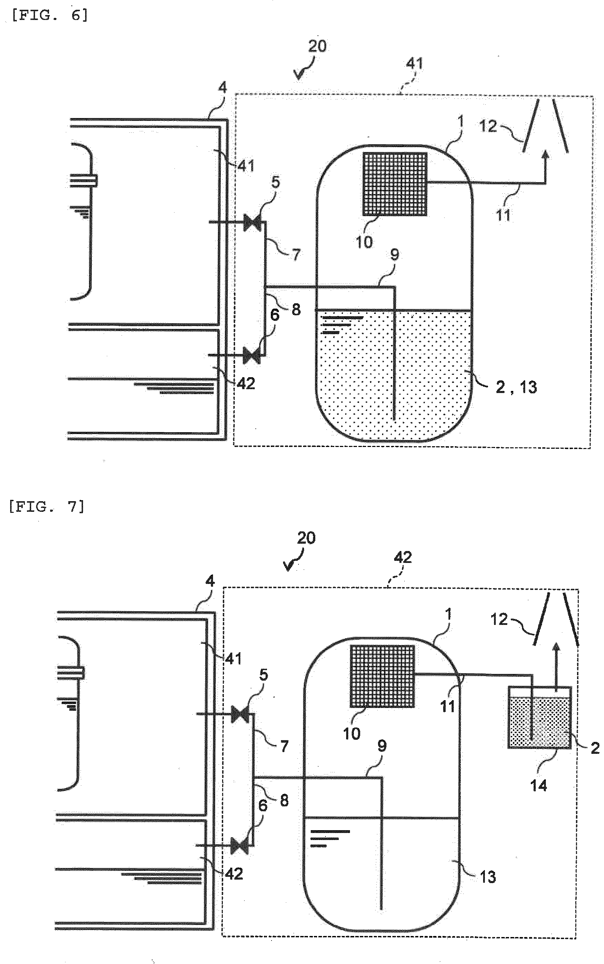

FIG. 6 is a diagram illustrating a filtered containment venting apparatus 31 according to a second embodiment. In the second embodiment, a hydrophilic nonvolatile liquid is used instead of the hydrophobic nonvolatile liquid in the first embodiment. The organic iodine can be trapped even using a hydrophilic nonvolatile liquid. Since the nonvolatile liquid is hydrophilic, the first trapping agent 2 is also hydrophilic, and the first trapping agent 2 is compatible with the second trapping agent 13 which is an aqueous solution. Therefore, in the second embodiment, both the nonvolatile liquid and the first reducing agent constituting the first trapping agent 2 and both the water and the second reducing agent constituting the second trapping agent 13 coexist. As described above, when the first reducing agent and the second reducing agent are the same type, the first reducing agent and the second reducing agent cannot be distinguished from each other and are integrally included in the filtered containment venting apparatus 31.

It is considered that the first reducing agent is contained in the hydrophilic nonvolatile liquid or interacts with the nonvolatile liquid in water. Therefore, it is considered that, even in a case of hydrophobic organic iodine, the first reducing agent containing the hydrophilic nonvolatile liquid and the first reducing agent acts in water, and iodide ions are generated and trapped in the nonvolatile liquid.

Similar to the first embodiment, the nonvolatile liquid is preferably an ionic liquid. Examples of the cation constituting the ionic liquid include organic cations containing at least one functional group such as imidazolium, pyridinium, ammonium, phosphonium, sulfonium, pyrrolidinium, piperidinium, and morpholinium. Specific examples thereof include an imidazolium salt, a pyridinium salt, a quaternary ammonium salt, a quaternary phosphonium salt, a tertiary sulfonium salt, a pyrrolidinium salt, a piperidinium salt or a morpholinium salt.

For example, methyl iodide, which is organic iodine, is slightly dissolved in hydrophilic 1-butyl-3-methylimidazolium iodide, but is dissolved in and uniformly mixed with hydrophilic 1-butyl-3-dodecylimidazolium bromide having the same halogen anion structure and different cation structures. Therefore, it is preferable to select and use a hydrophilic nonvolatile liquid capable of dissolving the organic iodine.

Examples of the anion include

organic anions such as $RO^-$, $RCO_2^-$, $RPO_3^-$, $RSO_3^-$, $RPO_4^-$, $R_2PO_2^-$, or $R_3CO^-$, and inorganic anions such as $HO^-$, $NO_2^-$, $FO_3^-$, $ClO_3^-$, $BrO_3^-$, $IO_3^-$, $FO_4^-$, $ClO_4^-$, $BrO_4^-$, or $IO_4^-$, which are anion-charged oxygen elements, and inorganic anions such as $F^-$, $Cl^-$, $Br^-$, $I^-$, $F_3^-$, $Cl_3^-$, $Br_3^-$, or $I_3^-$, which is an anion-charged halogen element.

Among these, since the anion has a strong action of decomposing the organic iodine, an ion having a high nucleophilic property is preferable, and an anion in which a charged element excluding a hydrogen element is present at the end is particularly preferable. Further, since the anion has a high nucleophilic property and hardly causes hydrolysis, and it is difficult to change the pH of the second trapping agent 13 when the anion is injected into the filtered containment venting vessel 1, an anion containing at least one functional group selected from $RO^-$, $RCO_2^-$, $RPO_3^-$, $RSO_3^-$, $RPO_4^-$, $R_2PO_2^-$, $R_3CO^-$, $HO^-$, $NO_2^-$, $FO_3^-$, $ClO_3^-$, $BrO_3^-$, $IO_3^-$, $FO_4^-$, $ClO_4^-$, $BrO_4^-$, $IO_4^-$, $F^-$, $Cl^-$, $Br^-$, $I^-$, $F_3^-$, $Cl_3^-$, $Br_3^-$ and $I_3^-$ is preferable.

Examples of the hydrophilic nonvolatile liquid include 1-butyl-3-dodecylimidazolium bromide. In the liquid in which the first trapping agent 2 and the second trapping agent 13 are compatible with each other, the concentration of the nonvolatile liquid is preferably 10 mass% or more (100, 000 ppm or more) . In addition, the content of the first reducing agent (an example of the generating component) is preferably 0.07 mass% or more (700 ppm or more) with respect to a total of the first reducing agent and the second reducing agent. Accordingly, the above decontamination factor can be set to 50 or more. When the first reducing agent and the second reducing agent are of the same type, the reducing agents cannot be distinguished in the liquid, and therefore, in this case, the concentration of the reducing agent is preferably 0.07 mass% or more, for example.

Similar to the above first embodiment, it is preferable that the pH of the liquid phase containing the second trapping agent 13 is alkaline. The pH of the liquid phase containing the second trapping agent 13 referred to here is the pH of the mixed liquid of the nonvolatile liquid and the second trapping agent 13 when the nonvolatile liquid is hydrophilic and the hydrophilic nonvolatile liquid and the second trapping agent 13 which is an aqueous solution are mixed as described above. Since the pH of the liquid phase containing the second trapping agent 13, that is, the mixed liquid is alkaline, the re-volatilization of the inorganic iodine can be particularly prevented.

The operating principle of the filtered containment venting apparatus 31 will be described with reference to FIG. 2. In the second embodiment, the inlet pipe 9 is also open to the inside of the second trapping agent 13 similar to the first embodiment. However, in the second embodiment, the inlet pipe 9 is also open to the inside of the first trapping agent 2 compatible with the second trapping agent 13. Thus, the gas supplied to the inside of the filtered containment venting vessel 1 through the inlet pipe 9 traps the organic iodine by the first trapping agent 2 and traps at least one of the aerosol and the inorganic iodine by the second trapping agent 13. After trapping, the gas passes through the outlet pipe 11 and is discharged to the outside by the exhaust cylinder 12 in a state where the radioactive substance is sufficiently removed.

As described above, although the organic iodine is not sufficiently trapped only by the second trapping agent 13 which is an aqueous solution containing the reducing agent, the organic iodine can be trapped with high efficiency by using the first trapping agent 2 in which the hydrophilic nonvolatile liquid and the reducing agent are used in combination (water may also be used in combination).

FIG. 7 is a diagram illustrating a filtered containment venting apparatus 32 according to a third embodiment. The filtered containment venting apparatus 32 includes an accommodation vessel 14 (an example of a second vessel or a vessel) in addition to the filtered containment venting vessel 1 in which the second trapping agent 13 is accommodated. The accommodation vessel 14 is connected to the outlet pipe 11 (an example of the pipe) communicating with the gas phase of the filtered containment venting vessel 1, and accommodates the first trapping agent 2. The accommodation vessel 14 is disposed outside the filtered containment venting vessel 1.

In the filtered containment venting apparatus 32, at least one component of the aerosol and the inorganic iodine in the gas supplied to the second trapping agent 13 is trapped by the second trapping agent 13 through the inlet pipe 9. On the other hand, bubbles containing the organic iodine which is not trapped rise inside the second trapping agent 13, and is supplied to the accommodation vessel 14 through the fiber filter 10 and the outlet pipe 11. Since the outlet pipe 11 is open to the inside of the first trapping agent 2, the organic iodine in the bubbles is trapped by the first trapping agent 2.

According to the filtered containment venting apparatus 32, since the first trapping agent 2 and the second trapping agent 13 are accommodated in different vessels, deterioration (hydrolysis or the like) caused by the interaction between the first trapping agent 2 and the second trapping agent 13 can be prevented over a long period of time until the use of the filtered containment venting apparatus 32 in an accident..In addition, since the accommodation vessel 14 accommodating the first trapping agent 2 is disposed outside the filtered containment venting vessel 1, it is possible to particularly prevent such an interaction.

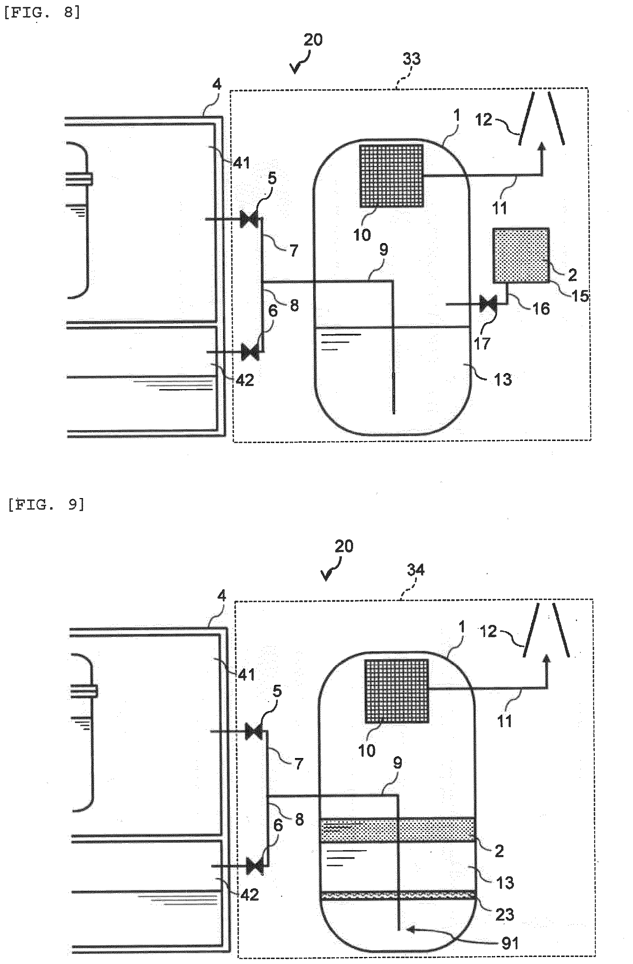

FIG. 8 is a diagram illustrating a filtered containment venting apparatus 33 according to a fourth embodiment. The filtered containment venting apparatus 33 includes a storage vessel 15 and a valve'17 in addition to the filtered containment venting vessel 1 accommodating the second trapping agent 13. The storage vessel 15 (an example of a third vessel or a vessel) is connected to the filtered containment venting vessel 1 through an injection pipe 16 (an example of the pipe) and accommodates the first trapping agent 2 to be supplied to the filtered containment venting vessel 1. The valve 17 (an example of a flow control mechanism) is a mechanism that controls the flow of the first trapping agent 2 in the injection pipe 16 that connects the filtered containment venting vessel 1 and the storage vessel 15.

When an accident occurs, the valve 17 is opened, so that the first trapping agent 2 is supplied to the filtered containment venting vessel 1. At this time, by supplying an inert gas to the storage vessel 15 by using an inert gas supply mechanism (not shown), discharge of the first trapping agent 2 from the storage vessel 15, that is, supply of the first trapping agent 2 to the filtered containment venting vessel 1 may be promoted. By the supply of the first trapping agent 2, the first trapping agent 2 and the second trapping agent 13 can coexist in the filtered containment venting vessel 1, and the organic iodine or the like is trapped by the operation described in each of the above embodiments.

As described in the third embodiment (FIG. 7), according to the filtered containment venting apparatus 33, since the first trapping agent 2 and the second trapping agent 13 are accommodated in different vessels, deterioration (hydrolysis or the like) caused by the interaction between the first trapping agent 2 and the second trapping agent 13 can be prevented over a long period of time until the use of the filtered containment venting apparatus 33 in an accident. In addition, since the accommodation vessel 14 accommodating the first trapping agent 2 is disposed outside the filtered containment venting vessel 1, it is possible to particularly prevent such an interaction.

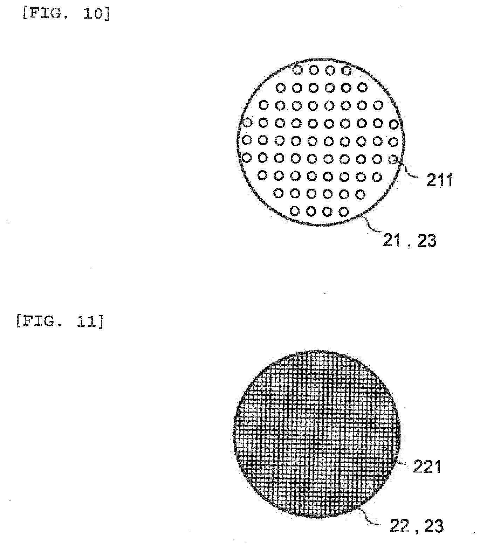

FIG. 9 is a diagram illustrating a filtered containment venting apparatus 34 according to a fifth embodiment. The filtered containment venting apparatus 34 includes a member 23 which is at least one of a porous member 21 (FIG. 10) and a rectifying member 22 (FIG. 11) so as to be immersed in the second trapping agent 13 above an opening 91 of the inlet pipe 9. The member 23 is not limited to the illustrated example in which the member 23 is immersed in the second trapping agent 13, and may be immersed in at least one of the first trapping agent 2 and the second trapping agent 13. By providing the member 23, it is possible to lengthen the residence time of the bubbles in at least one of the first trapping agent 2 and the second trapping agent 13 in which the member 23 is immersed, and it is possible to improve the trapping efficiency for the organic iodine, the aerosol, and the inorganic iodine.

FIG. 10 is a top view of the porous member 21. The porous member 21 is a circular porous plate having holes 211 of, for example, several mm to several cm (for example, 5 mm to 5 cm), and is fitted into the inside of the filtered containment venting apparatus 34 having a cylindrical shape. The thickness of the porous plate is preferably small, and specifically, can be set to, for example, several cm (for example, 1 cm to 5 cm). A gas supplied through the opening 91 (FIG. 9) comes into contact with the porous member 21 by being raised as bubbles, and escapes upward through the holes 211 formed in a scattered manner. Accordingly, the bubbles are retained below the porous member 21, and the trapping efficiency can be improved.

FIG. 11 is a top view of the rectifying member 22. The rectifying member 22 is, for example, a rectifying plate called a static mixer, and is formed of, for example, a wire mesh made of stainless steel. The rectifying member 22 has, for example, a circular shape, and is fitted into the inside of the filtered containment venting apparatus 34. The thickness of the rectifying plate is preferably large, and specifically, can be set to, for example, several tens of cm (for example, 10 cm to 50 cm). A gas supplied through the opening 91 (FIG. 9) comes into contact with the rectifying member 22 by being raised as bubbles, and passes upward through a mesh portion 221 of the rectifying member 22. Accordingly, the bubbles are retained below the rectifying member 22, and the trapping efficiency can be improved.

According to the filtered containment venting apparatus 34 (FIG. 9), it is possible to lengthen the residence time of the bubbles in contact with the first trapping agent 2 and the second trapping agent 13 in the filtered containment venting vessel 1. Accordingly, the trapping efficiency can be improved.

Reference Sign List

1     filtered containment venting vessel (first vessel)
10    fiber filter (radioactive substance removal filter)
11    outlet pipe (pipe)
12    exhaust cylinder
13    second trapping agent
14    accommodation vessel (second vessel, vessel)
15    storage vessel (third vessel, vessel)
16    injection pipe (pipe)
17    valve
2     first trapping agent
20    nuclear power plant (nuclear power structure)

21          porous member
211         hole
22          rectifying member
221         mesh portion
23          member
30, 31, 32, 33, 34    filtered containment venting apparatus (iodine trapping apparatus)
4           containment vessel (nuclear power structure main body)
41         dry well
42         wet well
5, 6        isolation valve
7           dry well venting pipe (venting pipe)
8           wet well venting pipe (venting pipe)
9           inlet pipe (venting pipe)
91         opening

**Claims**

**1.** An iodine trapping apparatus, comprising:

a first trapping agent (2) capable of trapping organic iodine in a gas in a nuclear power structure main body (4), wherein
the first trapping agent (2) contains

a generating and trapping component which generates an iodide ion from organic iodine and traps the generated iodide ion, and
a generating component which is a component different from the generating and trapping component, and generates an iodide ion from the organic iodine at least at 100°C to 130°C, and traps the generated iodide ion in the generating and trapping component.

2. The iodine trapping apparatus according to claim 1, wherein

the generating and trapping component is a nonvolatile liquid, and
the generating component is a first reducing agent.

3. The iodine trapping apparatus according to claim 1, wherein
the generating component has an oxidation-reduction potential of lower than 0.54 V, which is a standard electrode potential at which iodine is reduced.

4. The iodine trapping apparatus according to claim 1 or 2, wherein
the generating component has a content of 0.07 mass% or more with respect to the generating and trapping component.

5. The iodine trapping apparatus according to claim 4, wherein
the generating and trapping component is hydrophobic.

6. The iodine trapping apparatus according to claim 1 or 2, further comprising:
a second trapping agent (13) capable of trapping at least one component of aerosol further contained in the gas and the inorganic iodine, which is an aqueous solution containing a second reducing agent.

7. The iodine trapping apparatus according to claim 6, wherein
a liquid phase containing the second trapping agent (13) has a pH of alkaline.

8. The iodine trapping apparatus according to claim 6, wherein
the generating and trapping component is hydrophilic.

9. The iodine trapping apparatus according to claim 8, wherein
the generating component has a content of 0.07 mass% or more with respect to a total of the generating component and the second reducing agent.

10. The iodine trapping apparatus according to claim 1, wherein

the iodine trapping apparatus is a filtered containment venting apparatus (30-34) including

a first vessel (1) configured to trap at least one component of aerosol further contained in the gas and the inorganic iodine, accommodate a second trapping agent (13) which is an aqueous solution containing a second reducing agent, and communicate with the nuclear power structure main body (4) through a venting pipe open to an inside of the second trapping agent (13), and
a radioactive substance removal filter (10) configured to remove a radioactive substance in the gas, and

the first trapping agent (2) is disposed on an upper layer of the second trapping agent (13).

11. The iodine trapping apparatus according to claim 1, wherein
the iodine trapping apparatus is a filtered containment venting apparatus (30-34) including

a first vessel (1) configured to trap at least one component of aerosol further contained in the gas and the inorganic iodine, accommodate a second trapping agent (13) which is an aqueous solution containing a second reducing agent, and communicate with the nuclear power structure main body (4) through a venting pipe protruding to an inside of the second trapping agent (13),
a second vessel (14) to which a pipe communicating with a gas phase of the first vessel (1) is connected and in which the first trapping agent (2) is accommodated, and
a radioactive substance removal filter (10) configured to remove a radioactive substance in the gas.

12. The iodine trapping apparatus according to claim 1, wherein
the iodine trapping apparatus is a filtered containment venting apparatus (30-34) including

a first vessel (1) configured to trap at least one component of aerosol further contained in the gas and the inorganic iodine, accommodate a second trapping agent (13) which is an aqueous solution containing a second reducing agent, and communicate with the nuclear power structure main body (4) through a venting pipe protruding to an inside of the second trapping agent (13),
a radioactive substance removal filter (10) configured to remove a radioactive substance in the gas, a third vessel (15) which is connected to the first vessel (1) through a pipe and in which the first trapping agent (2) to be supplied to the first vessel (1) is accommodated, and
a flow control mechanism of the pipe connected to the first vessel (1) and the third vessel (15).

13. The iodine trapping apparatus according to any one of claims 10 to 12, further comprising:
a member which is at least one of a porous member (21) and a rectifying member (22) so as to be immersed in at least one of the first trapping agent (2) and the second trapping agent (13) above an opening of the venting pipe.

14. The iodine trapping apparatus according to claim 11 or 12, wherein
a vessel in which the first trapping agent (2) is accommodated is disposed outside the first vessel (1).

15. A nuclear power structure, comprising:

a nuclear power structure main body (4); and
an iodine trapping apparatus configured to trap organic iodine in a gas in the nuclear power structure main body (4),

wherein

the iodine trapping apparatus includes a first trapping agent (2) capable of trapping the organic iodine, and
the first trapping agent (2) contains a generating and trapping component which generates an iodide ion from the organic iodine and traps the generated iodide ions, and a component which is different from the generating and trapping component, generates an iodide ion from the organic iodine at least at 100°C to 130°C, and traps the generated iodide ion in the generating and trapping component.

[FIG. 1]

[FIG. 2]

[FIG. 3]

[FIG. 4]

[FIG. 5]

```
┌ ─ ─ ─ ─ ─ ─ ─ ─ ┐        ┌ ─ ─ ─ ─ ─ ─ ─ ┐
   ALKALINE                 NONVOLATILE
 AQUEOUS SOLUTION              LIQUID
└ ─ ─ ─ ─ ─ ─ ─ ─ ┘        └ ─ ─ ─ ─ ─ ─ ─ ┘
        │                        │
        ▼                        ▼
┌────────────────────────────────────────┐
│                  MIX                     │
└────────────────────────────────────────┘  S1
                   │
                   ▼
┌────────────────────────────────────────┐
│              MEASURE pH                  │
└────────────────────────────────────────┘  S2
                   │
                   ▼
┌────────────────────────────────────────┐
│               ADJUST pH                  │
└────────────────────────────────────────┘  S3
                   │
                   ▼
┌────────────────────────────────────────┐
│     FRACTIONATE NONVOLATILE LIQUID       │
└────────────────────────────────────────┘  S4
                   │
                   ▼
┌────────────────────────────────────────┐
│            EVAPORATE MOISTURE            │
└────────────────────────────────────────┘  S5
                   │
                   ▼
┌ ─ ─ ─ ─ ─ ─ ─ ─ ─ ─ ─ ─ ─ ─ ─ ─ ─ ─ ┐
           NONVOLATILE LIQUID
└ ─ ─ ─ ─ ─ ─ ─ ─ ─ ─ ─ ─ ─ ─ ─ ─ ─ ─ ┘
                   │
                   │        ┌ ─ ─ ─ ─ ─ ─ ─ ─ ─ ─ ─ ─ ─ ─ ─ ─ ─ ┐
                   │           AQUEOUS SOLUTION CONTAINING
                   ▼              FIRST REDUCING AGENT
┌────────────────────────────────┐◄── ─   (CONCENTRATION KNOWN)
│              MIX                │    └ ─ ─ ─ ─ ─ ─ ─ ─ ─ ─ ─ ─ ─ ─ ─ ─ ─ ┘
└────────────────────────────────┘  S6
                   │
                   ▼
┌────────────────────────────────────────┐
│     FRACTIONATE NONVOLATILE LIQUID       │
└────────────────────────────────────────┘  S7
                   │
                   ▼
┌────────────────────────────────────────┐
│            EVAPORATE MOISTURE            │
└────────────────────────────────────────┘  S8
                   │
                   ▼
┌ ─ ─ ─ ─ ─ ─ ─ ─ ─ ─ ─ ─ ─ ─ ─ ─ ┐
        FIRST TRAPPING AGENT 2
└ ─ ─ ─ ─ ─ ─ ─ ─ ─ ─ ─ ─ ─ ─ ─ ─ ┘
```

[FIG. 6]

[FIG. 7]

[FIG. 8]

[FIG. 9]

[FIG. 10]

211

21 , 23

[FIG. 11]

221

22 , 23

**EP 3 996 110 A1**

Europäisches
Patentamt

European
Patent Office

Office européen
des brevets

# EUROPEAN SEARCH REPORT

Application Number

EP 21 20 4908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/121714 A1 (HITACHI GE NUCLEAR ENERGY LTD [JP]) 18 June 2020 (2020-06-18) | 1-12,14, 15 | INV. G21F9/02 |
| Y | * paragraphs [0016] – [0020], [0035], [0049]; figures 1, 10, 17 * ----- | 13 | G21C13/02 |
| X | WO 2016/045980 A1 (WESTINGHOUSE ELECTRIC SWEDEN [SE]) 31 March 2016 (2016-03-31) | 1-7,9, 10,15 | |
| Y | * page 8, lines 22-34; claim 1; figure 1 * * page 11, line 32 – page 12, line 7 * ----- | 13 | |

TECHNICAL FIELDS
SEARCHED     (IPC)

G21F
G21C

The present search report has been drawn up for all claims

| Place of search | Date of completion of the search | Examiner |
|---|---|---|
| Munich | 15 March 2022 | Sewtz, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 21 20 4908

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2022

| Patent document cited in search report | | | Publication date | Patent family member(s) | | | Publication date |
|---|---|---|---|---|---|---|---|
| WO 2020121714 | A1 | | 18-06-2020 | EP | 3896704 | A1 | 20-10-2021 |
| | | | | JP | 2020094979 | A | 18-06-2020 |
| | | | | US | 2022051813 | A1 | 17-02-2022 |
| | | | | WO | 2020121714 | A1 | 18-06-2020 |
| WO 2016045980 | A1 | | 31-03-2016 | SE | 1451118 | A1 | 23-03-2016 |
| | | | | TW | 201615261 | A | 01-05-2016 |
| | | | | WO | 2016045980 | A1 | 31-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020042040 A
- JP 2003507185 T